# EUROPEAN PATENT APPLICATION

(11) **EP 1 450 544 A2**
(43) Date of publication of application: **25.08.2004**
(21) Application number: 04003610.5
(22) Date of filing: 18.02.2004
(51) Int. Cl.: H04L 29/12

(54) **Apparatus and method for converting IPv4 to IPv6 using dual stack**

(30) Priority: 18.02.2003 KR 2003010192
(71) Applicant: Samsung Electronics Co., Ltd., Suwon-si, Gyeonggi-do (KR)
(72) Inventor: Choe, Byoung-Gu, Yeongdeungpo-gu, Seoul (KR); Lee, Jae-Hoon, Seodaemoon-gu, Seoul (KR); Kang, Byung-Chang, 509-401 Jinsan-maeul, Suji-eub, Yongin-City, Gyeonggi-do (KR); Park, Eun-Young, Gangnam-gu, Seoul (KR)
(74) Representative: Lang, Johannes, Dipl.-Ing.

(57) **Abstract**

An apparatus for converting IPv4 to IPv6 using a dual stack and method thereof, where it is possible to support an IPv4-to-IPv6 conversion when a connection from an IPv4 node to an IPv6 node is initialized and even in case that there exists two or more DSTM TEPs (Dual Stack Transition Mechanism Tunneling End Point) in a DSTM domain. The apparatus for converting IPv4 to IPv6 using a dual stack in accordance with the present invention includes a DSTM server for, in case of receiving a DNS query message of an IPv4 type for a DSTM host from an IPv4 DNS server, converting the DNS query message of the received IPv4 type to a DNS query message of an IPv6 type which requests the IPv4 address and the IPv6 address of the DSTM host and transmitting the converted message to the IPv6 DNS server, and in case of not receiving a DNS response message including an IPv4 address of the DSTM host from the IPv6 DNS server, assigning an arbitrary IPv4 address to the DSTM host, registering the assigned IPv4 address in the IPv6 DNS server, informing the DSTM host of the assigned IPv4 address, and transmitting the assigned IPv4 address to the IPv4 DNS server; and a DSTM gateway.

## Description

### CROSS-REFERENCE TO RELATED APPLICATION

This application claims the benefit of Korean Patent Application No. 2003-10192 filed on February 18, 2003, the disclosure of which is hereby incorporated herein by reference in its entirety.

### BACKGROUND OF THE INVENTION

### Field of the Invention

The present invention relates to an apparatus for converting IPv4 to IPv6 (Internet Protocol Version 4 to Internet Protocol Version 6) using a dual stack and a method thereof and, more particularly, to an apparatus for converting IPv4 to IPv6 and the method thereof wherein it is possible to support an IPv4-to-IPv6 conversion even in cases that a connection from the IPv4 node to the IPv6 node is initialized using the dual stack and that a Dual Stack Transition Mechanism (referred to as DSTM, hereinafter) domain has one or more DSTM TEPs (Tunneling End Point).

### Description of the Related Art

As IPv6 begins to be introduced to an IPv4-based Internet, a technology for an IPv6 conversion mechanism supporting an existing IPv4-to-IPv6 conversion is under discussion.

The IPv6 conversion technology has restrictions as follows.

First, IPv6 is not compatible with IPv4 naturally. Secondarily, tens of millions of hosts operate in the IPv4 scheme only. Thirdly, IPv4 and IPv6 will coexist for a long time. Fourthly, some Internet networks do not upgrade to IPv6 eternally.

An IPv6 network being newly constructed will be constructed as a form of an IPv4/IPv6 dual network or an IPv6 native network, which is a form like an existing 6Bone or an isolation network.

Here, in order that the IPv6 network communicates with another external IPv6 network or the IPv4 network, it is possible to make a scenario that the IPv4 network coexists with the IPv6 network. It is IPv6 conversion mechanisms that make a natural communication between the IPv4 network and the IPv6 network on a network having both networks.

A variety of IPv6 conversion technologies are used in accordance with applicable environments of the IPv6 conversion mechanisms. That is, in equipments like a host and a router, a scheme of constructing an IPv4/IPv6 dual stack is the most basic IPv6 conversion scheme. In a gateway, the IPv4/IPv6 translation technology should be used in order that an IPv6 native host communicates with an IPv4 native host. In addition, in view of the network, in case that there exists the IPv4 network between the IPv6 host and another IPv6 network when both IPv6 hosts want to communicate with each other, IPv6-in-IPv4 tunneling technologies should be used.

These various IPv6 conversion technologies are being developed in the NGtrans (Next Generation Transition) WG (Working Group) of the IETF (The Internet Engineering Task Force).

The easiest method to keep an IPv6 node compatible with an IPv4 native node is to provide the IPv4/IPv6 dual stack. An IPv6/IPv4 dual stack node is able to send and receive both IPv6 packet and IPv4 packet. The IPv6/IPv4 dual stack node is directly compatible with the IPv4 node using the IPv4 packet and directly compatible with the IPv6 node using the IPv6 packet.

Since the IPv4/IPv6 dual stack node supports the above two protocols all, it can be established using both IPv4 and IPv6 addresses. The IPv4/IPv6 dual stack node can obtain a corresponding IPv4 address using the IPv4 mechanism (for example, DHCP) and a corresponding IPv6 native address using an IPv6 protocol mechanism(for example, stateless address auto configuration).

In the IPv4/IPv6 dual stack node, a DNS (Domain Names Service) is used in both IPv4 and IPv6 in order to perform a mapping between host names and IP addresses. A DNS resource record form being AAAA is used for the IPv6 address.

Since the IPv4/IPv6 dual stack node should be directly compatible with the IPv4 and the IPv6 nodes, a DNS address resolver library capable of processing an IPv6 AAAA record as well as an IPv4 A record should be provided. The DNS address resolver library of the IPv4/IPv6 dual stack node should be able to process both AAAA and A records.

However, in case of making inquiries about the AAAA record having the IPv6 address and the A record having the IPv4 address, the address resolver library can implement filtering or put in order of results that are returned an application in order to make an effect on an IP packet version used for communicating with the corresponding node.

On the other hand, the IPv4 address supporting compatibility between IPv6 and IPv4 should be used thoroughly. The node can be placed with IPv6 and needs to communicate with the IPv4 node without a dual IP layer which supports both IPv4 and IPv6.

The DSTM provides a method for providing a temporary global IPv4 address to the IPv6 node, an IPv4 traffic transmission using a dynamic tunnel in the IPv6 network, and a series of processes and architectures defined for a supporting infrastructure needed necessarily for this conversion mechanism.

The DSTM assigns the IPv4 address to a dual IP layer host if necessary. Then, the IPv6 host can communicate with an IPv4 native host or an IPv4 native application can be implemented in the IPv6 host without being revised. This assignment mechanism is related to a capability to implement the dynamic tunneling of the IPv4 packet in the IPv6 packet and to control an exposure of a pure IPv4 packet in a DSTM domain of the IPv6 network.

Since the router can transfer the IPv4 packet through the IPv6 network using an IPv6 routing table only, it becomes simple to manage network of the IPv6 deployment. That is, a manager of the network does not have to embody an IPv4 address plan capable of routing for the DSTM.

The DSTM includes a DHCPv6 (Dynamic Host Configuration Protocol Version 6) server which provides an IPv4 global address to the IPv6 host. The DHCPv6 server assigns a temporary IPv4 global address to the IPv6 host. The DHCPv6 server is also used to maintain a mapping between the assigned IPv4 address and a permanent IPv6 address of the host.

Each IPv6 DSTM host has an IPv4 interface called as a Dynamic Tunneling Interface (referred to as DTI, hereinafter) designed to encapsulate the IPv4 packet into the IPv6 packet.

There is a DSTM Demon operating together with DHCPv6 client so as to connect technologies of address space between IPv4 and IPv6.

When the DSTM host wants to communicate with the IPv4 host, it requests the global IPv4 address to the DHCPv6 server, and the DHCPv6 server transmits a temporary IPv4 address and an IPv6 address of the DSTM TEP (Tunneling End Point) to the DSTM host.

The DSTM host generates the IPv4 packet using the assigned IPv4 address, and performs an IPv4-over-IPv6 tunneling of the IPv4 packet to the DSTM TEP using the IPv6 address of the DSTM TEP.

When the DSTM TEP receives a packet tunneled from the DSTM host, it stores an IPv6 address of the DSTM host and the IPv4 address in its mapping table. In addition, the DSTM TEP performs a decapsulation of the received IPv6 packet and transmits the IPv4 packet to the IPv4 network.

When the DSTM TEP receives the IPv4 packet transmitted to the DSTM host from the IPv4 host, it performs the IPv4-over-IPv6 tunneling from the DSTM host using the IPv6 address of the DSTM host stored in its mapping table.

When the DSTM host having a dual stack wants to communicate with the IPv4 host, the DSTM tried to solve an IPv4 address exhaustion problem by assigning the IPv4 address dynamically.

However, there was a problem that the DSTM supports the IPv4-IPv6 conversion only in case of initializing a connection from the DSTM host to the IPv4 host. That is, the DSTM could not support the IPv4-IPv6 conversion in case of initializing a connection from the IPv4 host to the DSTM host.

Also, since the DSTM TEP performs the tunneling of the packet transmitted from the IPv4 host to the DSTM host in the state that it has binding information for the IPv6 address and the IPv4 address for the packet tunneled to itself, there is a restriction that all packets to be transmitted have to be transmitted only through the same DSTM TEP having the binding information. This restriction causes a problem that one DSTM domain cannot have a plurality of DSTM TEPs but only one DSTM TEP.

### SUMMARY OF THE INVENTION

Therefore, the present invention has been made in view of the above and other problems, and it is an object of the present invention to provide an apparatus for converting IPv4 to IPv6 using a dual stack and the method thereof wherein it is possible to support an IPv4-IPv6 conversion even in case that a connection from an IPv4 node not supported by a DSTM to an IPv6 node is initialized.

It is another object of the present invention to provide an apparatus for converting IPv4 to IPv6 using a dual stack and the method thereof wherein a problem occurring when one DSTM TEP does not operate properly can be solved by placing two or more DSTM TEPs in a DSTM domain.

It is yet another object to provide an apparatus and technique for converting IPv4 to IPv6 using a dual stack that is easy to implement, cost effective and efficient.

In accordance with an aspect of the present invention, there is provided an apparatus for converting IPv4 to IPv6 using a dual stack inlcuding: a DSTM server for converting a DNS query message that inquiries an IPv4 address of a DSTM host received from an IPv4 DNS server to a DNS query message which requests both IPv4 address and IPv6 address and then transmitting the converted message to the IPv6 DNS server, assigning an arbitrary IPv4 address to the DSTM host and storing the assigned IPv4 address in the host in case of receiving a DNS response message including IPv6 address information only from the IPv6 DNS server, registering the assigned IPv4 address in the IPv6 DNS server and informing the DSTM host of it, and transmitting a DNS response message including the assigned IPv4 address to the IPv4 DNS server; and a DSTM TEP for decapsulating data which are IPv4-over-IPv6 tunneled from the DSTM server or the DSTM host and transmitting the decapsulated data as an IPv4 packet to the IPv4 DNS server or the IPv4 host, and, in case of receiving the IPv4 packet from the IPv4 DNS server or the IPv4 host, referring to a mapping table which is held and managed by itself, encapsulating the packet and performing an IPv4-over-IPv6 tunneling to deliver the packet to the DSTM server or the DSTM host.

Preferably, the DSTM server includes a DNS application layer gateway which, in case of receiving the DNS query message inquiring the IPv4 address of the DSTM host which has passed the IPv4 DNS server from the IPv4 host, converting the received DNS query message to a DNS query message requesting both IPv4 address and IPv6 address and transmitting the converted message to the IPv6 DNS server; a mapping table for storing binding information such as the IPv6 address and the assigned IPv4 address of the DSTM host, a lifetime, and so on; and a DSTM controller for, in case of receiving the DNS query message that inquiries the IPv4 address for the DSTM host from the IPv4 DNS server, transmitting the query message to the DNS application layer gateway, in case of receiving a DNS response message including IPv4 address information of the DSTM host from the IPv6 DNS server, transmitting the response message to the IPv4 DNS server, in case of receiving a DNS response message including IPv6 address information of the DSTM host only from the IPv6 DNS server, assigning an arbitrary IPv4 address to the DSTM host and then storing the assigned IPv4 address in the mapping table, registering the assigned IPv4 address in the IPv6 DNS server and informing the DSTM host of the assigned IPv4 address, and converting the DNS response message received from the IPv6 DNS server through the DNS application layer gateway to a DNS response message including the assigned IPv4 address and transmitting the converted message to the IPv4 DNS server.

Preferably, in case of receiving a DSTM address extension request message from the DSTM host, the DSTM controller extends a lifetime of the IPv4 address and then operates a timer again, updates the IPv6 DNS server on DNS information about a corresponding IPv4 address and transmits the DSTM address extension response message to the DSTM host.

Preferably, the DSTM address extension request message includes a lifetime field indicating a remaining time of the lifetime; an IPv4 address field indicating the IPv4 address; and an IPv6 address field indicating the IPv6 address of the DSTM host, and the DSTM address extension response message includes a code field indicating the result of the process for the DSTM address extension request message; a lifetime field indicating the extended lifetime; an IPv4 address field; and an IPv6 address field indicating an IPv6 address of the DSTM TEP.

Preferably, in case that the DSTM TEP receives an IPv4 packet for which the DSTM TEP does not have binding information in its mapping table, the DSTM TEP transmits a binding request message to the DSTM controller, and receives a binding information response message from the DSTM controller, and the DSTM controller, in case of receiving a binding request message, searches for the mapping table and transmits to the DSTM TEP the DSTM binding response message including the IPv6 address for the requested IPv4 address.

Preferably, the binding request message transmitted by the DSTM TEP includes an IPv4 address field indicating an IPv4 address of a global assigned to the DSTM host; and an IPv6 address field indicating an IPv6 address of the DSTM TEP which transmits a DSTM binding request message, and a binding response message transmitted by the DSTM controller includes a code field indicating the result of the process for the DSTM binding request message; a 32-bit IPv4 address field indicating an IPv4 address of a global assigned to the DSTM host; and an IPv6 address field indicating an IPv6 address of the DSTM host.

In accordance with another aspect of the present invention, there is provided a method for converting IPv4 to IPv6 using a dual stack, including: a) in case that a DSTM server receives from an IPv4 host a DNS query message inquiring an IPv4 address of a DSTM host which passed the IPv4 DNS server, converting the received DNS query message to a DNS query message that requests both IPv4 address information and IPv6 address information; b) transmitting the DNS query message converted in the step a) to an IPv6 DNS server; c) in case that the DSTM server receives from the IPv6 DNS server the DNS response message including the IPv4 address information of the DSTM host, transmitting the DNS response message to the IPv4 DNS server by the DSTM server; d) in case that the DSTM server receives from the IPv6 DNS server, the DNS response message including the IPv4 address information of the DSTM host only, assigning an arbitrary IPv4 address to the DSTM host by the DSTM server; and e) by the DSTM server, registering the IPv4 address assigned in the step d) to the IPv6 DNS server and informing the DSTM host of the assigned IPv4 address, and converting the DNS response message received from the IPv6 DNS server to the DNS response message including the assigned IPv4 address and transmitting the converted message to the IPv4 DNS server so that a packet can be exchanged between the IPv4 host and the DSTM host.

Preferably, the step a) includes: a-1) transmitting a DNS query message to the IPv4 DNS server by the IPv4 host; a-2) transmitting a DNS query message to a DSTM TEP by the IPv4 DNS server; a-3) transmitting a DNS query message to a DSTM server by the DSTM TEP; and a-4) by the DSTM server, converting a DNS query message of an IPv4 type to a DNS query message including both IPv4 type and IPv6 type and transmitting the converted message to the IPv4 DNS server.

Preferably, the step e) includes: e-1) in case that the DSTM server receives from the IPv6 DNS server a DNS response message including an IPv6 address of the DSTM host only, assigning a temporary IPv4 address to the DSTM host; e-2) storing binding information such as an IPv6 address and the assigned address of the DSTM host, a lifetime, and so on in the mapping table by the DSTM server; e-3) registering a DNS name of the DSTM host and the assigned IPv4 address in the IPv6 DNS server by the DSTM server; e-4) by the DSTM server, transmitting the DSTM address assignment message to the DSTM host and informing the DSTM host of the assigned IPv4 address and an IPv6 address of the DSTM TEP; e-5) performing an IPv4-over-IPv6 tunneling to deliver the DNS response message to the DSTM TEP by the DSTM server; e-6) by the DSTM TEP, decapsulating the tunneled message and transmitting to the IPv4 DNS server a DNS response message including an IPv4 address of the DSTM host; and e-7) by the IPv4 DNS server, transmitting the response message to the IPv4 host and exchanging the data packet between the IPv4 host and the DSTM host.

Preferably, the method further inlcudes: e-8) transmitting to the DSTM server a DSTM address extension request message by the DSTM host; e-9) by the DSTM server, in case of receiving a DSTM address extension request message from the DSTM host, extending the lifetime of the IPv4 address and then operating the timer again, updating the IPv6 DNS server on the corresponding information, and transmitting to the DSTM host a DSTM address extension response message; and e-10) by the DSTM host, receiving the DSTM address extension response message from the DSTM server and operating the timer again.

Preferably, the step e-7) of exchanging a data packet between the IPv4 host and the DSTM host includes: e-7-1) by the IPv4 host, generating a packet using the transmitted IPv4 address and transmitting the generated packet to the DSTM TEP; e-7-2) by the DSTM TEP, searching for the IPv6 address from the mapping table, encapsulating the packet using the searched IPv6 address, and transmitting the encapsulated packet to the DSTM host; e-7-3) by the DSTM host, encapsulating the IPv4 packet and then transmitting the encapsulated packet to the DSTM TEP; and e-7-4) by the DSTM TEP, decapsulating the packet and then transmitting the decapsulated packet to the IPv4 host.

Preferably, the method further includes: e-7-5) in case that the IPv6 address was not found in the mapping table in step of transmitting the encapsulated packet to the DSTM host, transmitting the binding request message to the DSTM server; e-7-6) by DSTM server, in case of receiving the binding request message, searching for the mapping table and transmitting to the DSTM TEP a DSTM binding response message including an IPv6 address for the requested IPv4 address; and e-7-7) by the DSTM TEP, receiving the binding response message from the DSTM server and encapsulating the packet using the IPv6 address, and then transmitting the encapsulated packet to the DSTM host.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:

Fig. 1 is a view showing a block construction of an apparatus for converting IPv4 to IPv6 using a dual stack in accordance with an embodiment of the present invention;

Figs. 2A to 2F are views showing formats of DSTM address assignment used in the present invention;

Fig. 3 is a flow chart showing a method for converting IPv4 to IPv6 using a dual stack in accordance with an embodiment of the present invention;

Fig. 4 is a flow chart showing a method for transmitting a packet from an IPv4 host to a DSTM host;

Fig. 5 is a flow chart showing a method for transmitting a packet from a DSTM host to an IPv4 host; and

FIG. 6 shows an example of a computer including a computer-readable medium having computer-executable instructions for performing a technique of the present invention.

### DETAILED DESCRIPTION OF THE PREFERED EMBODIMENTS

Now, preferred embodiments of the present invention will be described in detail with reference to the annexed drawings in order that those skilled in the art can embody the present invention with ease.

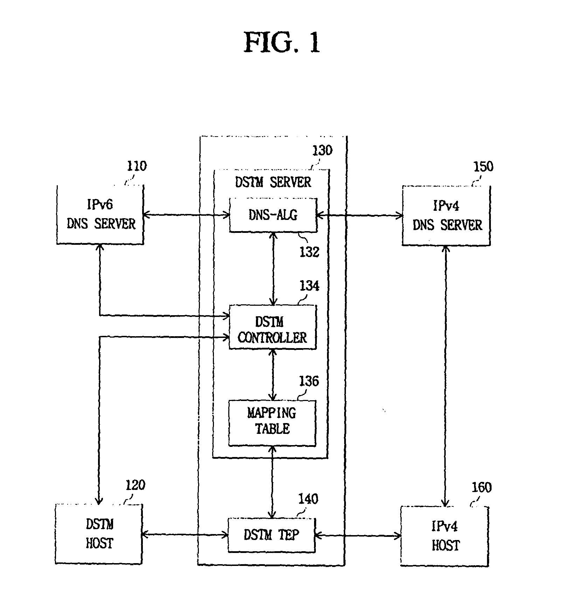

Fig. 1 is a view showing a block construction of an apparatus for converting IPv4 to IPv6 using a dual stack in accordance with the present invention.

Referring to Fig. 1, an apparatus for converting IPv4 to IPv6 using a dual stack in accordance with an embodiment of the present invention includes an IPv6 DNS server 110 which performs a mapping of a domain name and an IPv6 address, has a domain name of a DSTM host 120, IPv6 address information and IPv4 address information, provides the address information of the DSTM host that the server has if the server receives a DNS query message asking about an IP address of the DSTM host 120, a DSTM host 120 which has a dual stack and performs an IPv4-over-IPv6 tunneling to deliver the IPv4 packet to a DSTM TEP 140 using the dual stack, a DSTM server 130 which assigns an IPv4 address dynamically, updates DNS information for the DSTM host in the IPv6 DNS server 110 dynamically, and manages binding information, a DSTM TEP 140 which performs a tunneling of a packet between the DSTM host 120 and an IPv4 host 160, an IPv4 DNS server 150 which performs a mapping of a domain name of host in an IPv4 network and the IPv4 address, and the IPv4 host 160.

Also, the DSTM server 130 includes a DNS-ALG (Application Level Gateway) 132, a DSTM controller 134 and a mapping table 136 which are used to convert a DNS message of an IPv4 type A to a DNS message of an IPv6 type AAAA, and vice versa.

In case that the IPv4 host 160 wants to communicate with the DSTM host 120, the IPv4 host 160 transmits the DNS query message to the IPv4 DNS server 150 and obtains an IP address of the DSTM host 120, so that the IPv4 host 160 tries to communicate with the DSTM host 120 using the address.

However, since a DNS record type (A) for IPv4 is different from a DNS record type (AAAA) for IPv6, the IPv4 host 160 cannot recognize a DNS response message (AAAA) for the DSTM host 120.

Also, since the IPv4 host 160 cannot recognize the IPv6 address for the DSTM host 120, there can be no communication between the IPv4 host 160 and the IPv6 host 120 through a general DNS query/response.

Accordingly, the present invention has a DNS-ALG (Application Level Gateway) in the DSTM server 130, which is employed to convert the DNS message of A type representing IPv4 address information to the DNS message of AAAA type representing IPv6 address information, and vice versa.

When the IPv4 host 160 wants to communicate with the DSTM host 120, it transmits to the IPv4 DNS server 150 a DNS query message of A type asking about the IPv4 address of the DSTM host 120.

Since the IPv4 DNS server 150 which received DNS query message for the DSTM host 120 from the IPv4 host 160 does not have the DNS information for the DSTM host 120, it transmits to the IPv6 DNS server 110 existing in the DSTM domain a DNS query message of A type asking about the IPv4 address of the DSTM host 120. In the above case, the IPv6 DNS server 110 should have a global IPv4 address assigned fixedly, and the IPv4 DNS server 150 should know the IPv4 address of the IPv6 DNS server 110.

The DNS query message A transmitted by the IPv4 DNS server 150 is transmitted to the DSTM TEP 140 being a gateway router of the DSTM domain.

The DSTM TEP 140 can recognize the query message A as a packet to be transmitted to the IPv6 DNS server 110 by referring to a destination address of the packet (IPv4 address of the IPv6 DNS). After receiving the packet, the DSTM server 130 converts the DNS query message of A type through the DNS-ALG 132 to the DNS query message of A/AAAA type which requests all of IPv4 address information and IPv6 address information and transmits it to IPv6 DNS server 110.

In case that the DSTM controller 134 of the DSTM server 130 receives from the IPv6 DNS server 110 the DNS response message of A type which includes the IPv4 address information of the DSTM host 120 only (in case that the DSTM host 120 was assigned the IPv4 address already), the DSTM controller 134 performs IPv4-over-IPv6 tunneling to deliver the DNS response message of A type received to the DSTM TEP 140 without converting the DNS response message through the DNS-ALG 132 to the DSTM TEP 140 (here, a sender address of the IPv4 packet : an IPv4 address of the IPv6 DNS server 110, a destination address of the IPv4 packet : the IPv4 address of the IPv4 DNS server 150, a sender address of the IPv6 packet : the IPv6 address of the DSTM server 130, a destination address of IPv6 packet : the IPv6 address of the DSTM TEP 140), and the DSTM TEP 140 decapsulates the DNS response message and then transmits to the IPv4 DNS server 150 the DNS response message which includes the IPv4 address of the DSTM host.

In case that the DSTM controller 134 receives from the IPv6 DNS server 110 A/AAAA type DNS response message which includes all of the IPv4 address information and the IPv6 address information of the DSTM host 120, the DSTM controller 134 converts the DNS response message of the A/AAAA type received through the DNS-ALG 132 to the DNS response message of A type including the IPv4 address information only and performs the IPv4-over-IPv6 tunneling to deliver the response message to the DSTM TEP 140 (here, a sender address of the IPv4 packet : an IPv4 address of the IPv6 DNS server 110, a destination address of the IPv4 packet : the IPv4 address of the IPv4 DNS server 150, a sender address of the IPv6 packet : the IPv6 address of the DSTM server 130, a destination address of the IPv6 packet : the IPv6 address of the DSTM TEP 140), and the DSTM TEP 140 decapsulates the DNS response message and then transmits it to the IPv4 DNS server 150.

In case that the DSTM controller 134 receives from the IPv6 DNS server 110 the DNS response message of an AAAA type including the IPv6 address information of the DSTM host 120 only (in case that the DSTM host 120 was not assigned any IPv4 address yet, and the IPv4 host tries to initialize a connection to the DSTM host 120), the DSTM controller 134 assigns a temporary IPv4 address to the DSTM host 120.

The DSTM controller 134 stores the IPv6 address of the DSTM host 120, the assigned IPv4 address and binding information such as a lifetime in a mapping table 136, and sets up a timer for the lifetime.

The DSTM controller 134 registers the DNS name of the DSTM host 120 and the assigned IPv4 address in the IPv6 DNS server 110, and transmits the DSTM address assignment message to the DSTM host 120, so that it informs the DSTM host 120 of the assigned IPv4 address and the IPv6 address of the DSTM TEP necessary when performing the tunneling.

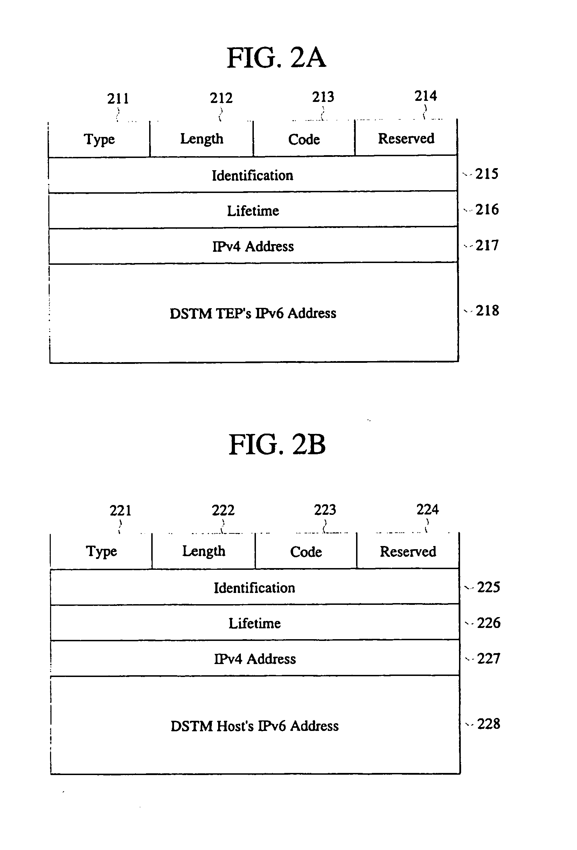

A format of the DSTM address assignment message used is shown in Fig. 2A.

Referring to Fig. 2A, the DSTM address assignment message includes an 8-bit type field 211 indicating that the DSTM message type (TBD) is DSTM address assignment message, a length field 212 of an 8-bit unsigned integer indicating the length of the DSTM address assignment message (8-byte unit), an 8-bit code field 213 indicating the result of the process in case that the DSTM host 120 requests the IPv4 address assignment by transmitting a DSTM address assignment request message to the DSTM server 130 - the address assignment request is processed normally if the code field indicates 0 (the IPv4 address includes the IPv4 address which can be used in the field), and the address assignment request is not accepted if the code field indicates 1 (setting up the IPv4 address field as 0), an 8-bit reserved field 214, an identification field 215 of a 32-bit unsigned integer which, in case that the DSTM host 120 requests the IPv4 address assignment by transmitting the DSTM address assignment request message to the DSTM server 130, is used to match the DSTM address assignment request message with the DSTM address assignment message, a lifetime field 216 of the 32-bit unsigned integer indicating a valid time of the assigned IPv4 address, a 32-bit IPv4 address field 217 indicating a global IPv4 address assigned to the DSTM host 120, and an IPv6 address field 218 indicating IPv6 address of the DSTM TEP 140 which the DSTM host 120 uses for tunneling of the IPv4 packet.

On the other hand, if the DSTM host 120 receives the DSTM address assignment message from the DSTM server 130, it stores the IPv6 address of the DSTM TEP 140 necessary for tunneling of the assigned IPv4 and IPv4 packet, sets up a timer for a lifetime value of the IPv4 address, and transmits the DSTM address assignment response message to the DSTM server 130.

A format of the DSTM address assignment response message used is shown in Fig. 2B.

Referring to Fig. 2B, the DSTM address assignment response message includes an 8-bit type field 221 indicating that the DSTM message type (TBD) is a DSTM address assignment response message, a length field 222 of an 8-bit unsigned integer indicating the length of the DSTM address assignment response message (8-byte unit), an 8-bit Code field 223 indicating the result of the process for the DSTM address assignment message - the address assignment request is processed normally if the code field indicates 0, and the address assignment request is not accepted if the code field indicates 1, an 8-bit reserved field 224, an identification field 225 of a 32-bit unsigned integer which is used to match the DSTM address assignment response message with the DSTM address assignment message, a lifetime field 226 of a 32-bit unsigned integer indicating a valid time of the assigned IPv4 address, a 32-bit IPv4 address field 227 which is designated a global IPv4 address assigned to the DSTM host, and an IPv6 address field 228 indicating an IPv6 address of the DSTM host which transmits the DSTM address assignment response message.

When the DSTM controller 134 receives the DSTM address assignment response message from the DSTM host 120, it converts the DNS message of an AAAA type received from the IPv6 DNS server 110 through the DNS-ALG 132 to DNS response message of an A type including the IPv4 address of the DSTM host 120, performs an IPv4-over-IPv6 tunneling to deliver the converted response message to the DSTM TEP 140 (here, a sender address of the IPv4 packet : an IPv4 address of the IPv6 DNS server 110, a destination address of the IPv4 packet : an IPv4 address of the IPv4 DNS server 150, a sender address of the IPv6 packet : an IPv6 address of the DSTM server 130, a destination address of IPv6 packet : an IPv6 address of the DSTM TEP 140), decapsulates the tunneled A type DNS response message in the DSTM TEP 140, and transmits it to the IPv4 DNS server 150.

The IPv4 DNS server 150 which received the DNS response message transmits to the IPv4 host 160 the received DNS response message, and the IPv4 host 160 transmits the IPv4 packet to the DSTM host 120 using the IPv4 address of the DSTM host 120 obtained from the DNS response message.

The IPv4 packet transmitted to the DSTM host 120 by the IPv4 host 160 is transmitted to the DSTM TEP 140 being a gateway router of the DSTM domain.

When the DSTM TEP 140 receives the IPv4 packet transmitted from the IPv4 host 160, it is checked whether or not its mapping table has IPv6 address for the destination IPv4 address of the received IPv4 packet (an IPv4 address of the DSTM host).

In case that there exists the IPv6 address for the destination IPv4 address of the received IPv4 packet in the mapping table, the DSTM TEP 140 encapsulates the IPv4 packet received from the IPv4 host (a sender address of the IPv6 pakket : an IPv6 address of the DSTM TEP 140, a destination address of the IPv6 packet : an IPv6 address of the DSTM host 120) and performs an IPv4-over-IPv6 tunneling of the packet to the DSTM host 120.

When the DSTM host 120 receives the IPv4-over-IPv6 tunneled packet from the DSTM TEP 140, it can receive an original IPv4 packet that the IPv4 host has transmitted by performing a decapsulation of the received packet.

In case that the IPv6 address for the destination IPv4 address of the received IPv4 packet does not exist in the mapping table, the DSTM TEP 140 requests the DSTM server to transmit the IPv6 address for the destination (DSTM host 120) IPv4 address of the received IPv4 packet by transmitting the DSTM binding request message to the DSTM server 130.

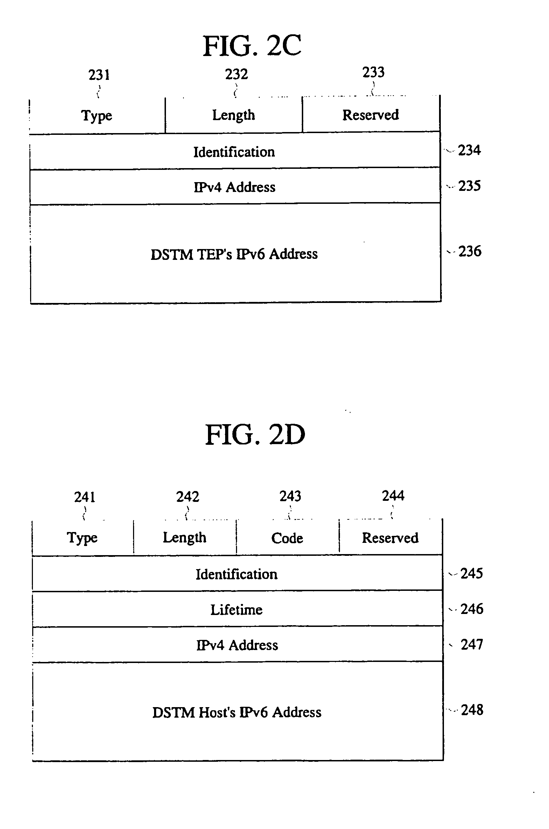

A message format of the binding request message transmitted is shown in Fig. 2C.

Referring to Fig. 2C, the binding request message includes an 8-bit type field 231 indicating that the DSTM message type (TBD) is a binding request message, a length field 232 of an 8-bit unsigned integer indicating the length of the binding request message (8-byte unit), a 16-bit reserved field 233, an identification field 234 of a 32-bit unsigned integer which is used to match the DSTM binding request message with the DSTM binding response message, a 32-bit IPv4 address field 235 indicating the IPv4 address of the DSTM host, and an IPv6 address field 236 indicating the IPv6 address of the DSTM TEP 140 which transmits the DSTM binding request message.

The DSTM controller 134 which has received the DSTM binding request message from the DSTM TEP 140 searches for the mapping table 136 and transmits a DSTM binding response message including the IPv6 address for the IPv4 address of the DSTM host 120 to the DSTM TEP 140 which has requested binding information.

A format of the DSTM binding response message used is shown in Fig. 2D.

Referring to Fig. 2D, the DSTM binding response message includes an 8-bit type field 241 indicating that the DSTM message type (TBD) is a DSTM binding response message, a length field 242 of an 8-bit unsigned integer indicating the length of the DSTM binding response message (8-byte unit), a code field 243 indicating a result of the process for the DSTM binding request message - requested binding information exists if the code field indicates 0 (the IPv6 address field of the DSTM host 120 includes the IPv6 address of the DSTM host 120), and the binding information does not exist if the code field indicates 1 (the IPv6 address field of the DSTM host 120 is set up as 0), a reserved field 244, an identification field 245 of a 32-bit unsigned integer which is used to match the DSTM binding request message with the DSTM binding response message, a lifetime field 246 of a 32-bit unsigned integer indicating a valid time for which the binding information can be used, a 32-bit IPv4 address field 247 indicating the IPv4 address of the DSTM host 120, and an IPv6 address field 248 indicating IPv6 address of the DSTM host 120.

The DSTM TEP 140 receives the DSTM binding response message from the DSTM controller 134, stores binding information such as the IPv4 address and the IPv6 address of the DSTM host 120 and a lifetime in its mapping table 136, sets up a timer for the lifetime, and performs an IPv4-over-IPv6 tunneling (a sender address of the IPv6 packet : IPv6 address of the DSTM TEP 140, a destination address of the IPv6 packet : an IPv6 address of the DSTM host 120) to deliver the IPv4 packet received from the IPv4 host 160 to the DSTM host 120 using the binding information.

When the timer that is set up at each entry of the mapping table 136 expires (if the lifetime for the IPv4 address assigned to the DSTM host is lapsed), the DSTM controller 134 removes a corresponding entry from the mapping table, and withdraws the IPv4 address assigned to the DSTM host 120 (in order that the packet transmitted to the host which is previously assigned the IPv4 address is not transmitted erroneously to DSTM host which is newly assigned the withdrawn IPv4 address, the withdrawn IPv4 address is adapted to be reassigned to a new DSTM host after twice of the lifetime is lapsed).

In order that the DSTM host 120 continues to use the IPv4 address assigned to itself ever after expiration of the lifetime, the DSTM host has to extend the lifetime of the IPv4 address assigned by transmitting the DSTM address extension request message to the DSTM controller 134 before expiration of the lifetime.

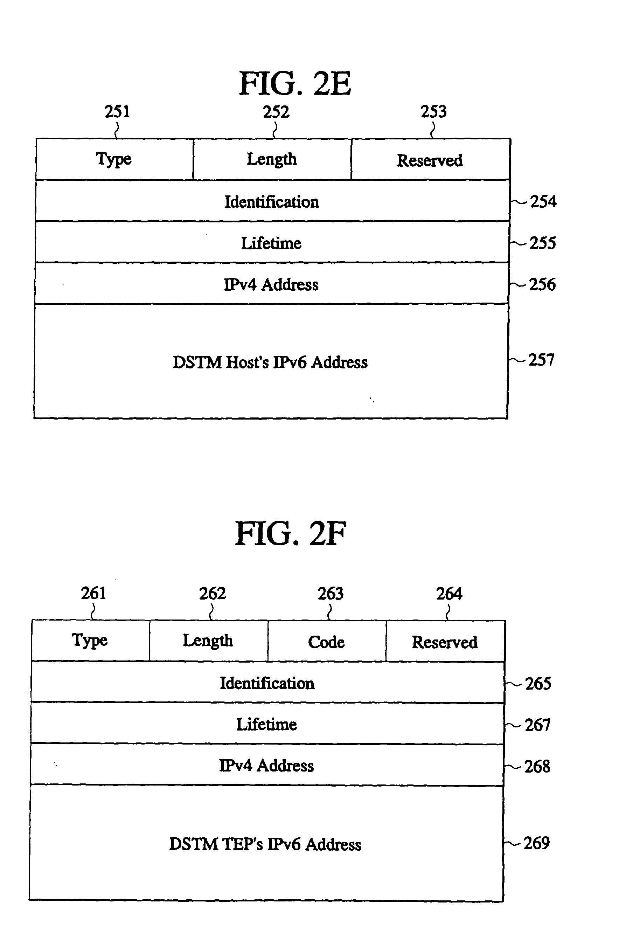

A format of a DSTM address extension request message used is shown in Fig. 2E.

Referring to Fig. 2E, the DSTM address extension request message includes an 8-bit type field 251 indicating that the DSTM message type (TBD) is a DSTM address extension message, a length field 252 of an 8-bit unsigned integer indicating the length of the DSTM address extension request message (8-byte unit), a 16-bit reserved field 253, an identification field 254 of a 32-bit unsigned integer which is used to match the DSTM address extension request message with the DSTM address extension response message, a lifetime field 255 of a 32-bit unsigned integer indicating a remaining time before expiration of valid time of assigned IPv4 address, a 32-bit IPv4 address field 256 indicating assigned global IPv4 address, and an IPv6 address field 257 indicating IPv6 address of the DSTM host.

If the DSTM controller 134 receives DSTM address extension request message from the DSTM host 120, it searches for a corresponding entry from the mapping table 136, extends the lifetime, sets up a corresponding timer again, updates the IPv6 DNS server on DNS information about a corresponding IPv4 address, and transmits the DSTM address extension response message to the DSTM host 120.

A format of the DSTM address extension response message used is shown in Fig. 2F.

Referring to Fig. 2F, the DSTM address extension response message includes an 8-bit type field 261 indicating that DSTM message type (TBD) is a DSTM address extension response message, a length field 262 of an 8-bit unsigned integer indicating the length of the DSTM address extension response message (8-byte unit), a code field 263 indicating a result of the process for the DSTM address extension request message - if the code field is 0, it indicates that the address extension request is successfully processed (the IPv4 address field includes an extended IPv4 address), and if the code field is 1, it indicates that the address extension request is not accepted (the IPv4 address field is set up as 0), an 8-bit reserved field 264, an Identification field 265 of a 32-bit unsigned integer which is used to match the DSTM address extension message with the DSTM address extension response message, a lifetime field 267 of a 32-bit unsigned integer indicating a valid time of the extended IPv4 address, a 32-bit IPv4 address field 268 indicating a global IPv4 address assigned to the DSTM host, and an IPv6 address field 269 indicating IPv6 address of the DSTM TEP which the DSTM host uses for tunneling the IPv4 packet.

In case that corresponding binding information is not used until a timer installed at each entry of a mapping table 136 is expired, the DSTM TEP 140 removes corresponding entry from the mapping table. Additionally, in case that the corresponding binding information is used before the expiration of the timer, the DSTP TEP 140 transmits the binding request message to the DSTM server 130 before the expiration of the timer, and updates itself on the binding information and sets up the corresponding timer again.

In case that there exist two or more DSTM TEPs in a DSTM domain, packets that the IPv4 host has transmitted to the DSTM host 120 may be transmitted through other DSTM TEP rather than corresponding DSTM TEP.

Accordingly, as described above, in case that the DSTM TEP receives an IPv4 packet whose binding information the DSTM TEP does not have in its mapping table, it makes a request for the binding information to the DSTM server, and the DSTM server transmits the corresponding binding information to the DSTM TEP. Therefore, there may be two or more DSTM TEPs in a DSTM domain.

Also, the DSTM server and the DSTM TEP can be embodied as one apparatus (DSTM Translator).

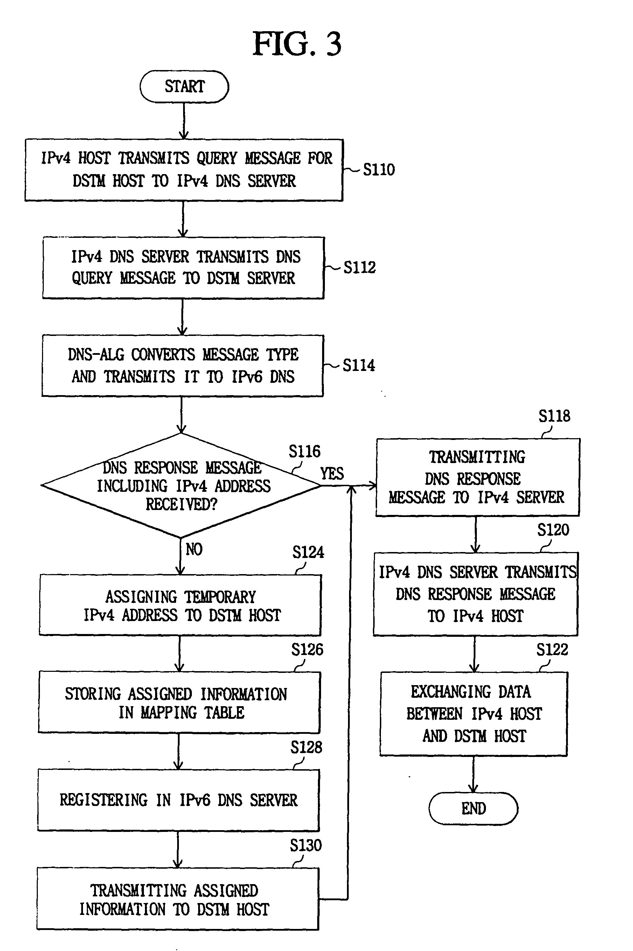

Fig. 3 is a flow chart showing a method for converting IPv4 to IPv6 using a dual stack in accordance with an embodiment of the present invention.

Referring to Fig. 3, a method for converting IPv4 to IPv6 using a dual stack in accordance with an embodiment of the present invention firstly includes a step in which, in case that an IPv4 host 160 wants to communicate with a DSTM host 120, the IPv4 host 160 makes a request for the IP address by transmitting a DNS (Domain Name System) query message to an IPv4 DNS server 150 (step S110).

Since the IPv4 DNS server 150 which received DNS query message for the DSTM host 120 from the IPv4 host 160 does not have DNS information for the DSTM host 120, it transmits the DNS query message to a DSTM TEP 140 which is a gateway router of the DSTM domain in order to obtain the IPv4 address of the DSTM host 120 from the IPv6 DNS server 110 residing in the DSTM domain.

The DSTM TEP 140 refers to a destination address of the packet (the IPv4 address of the IPv6 DNS) and then recognizes the received DNS query message as a packet to be transmitted to the IPv6 DNS server 110 so as to transmit the query message to the DSTM server 130 (step S112).

Next, the DSTM server 130 converts the DNS query message of IPv4 type to a DNS query message A/AAAA including both IPv4 type and IPv6 type through a DNS-ALG 132 and transmits it to the IPv6 DNS server 110 (step S114).

Next, in case that the DSTM controller 134 receives a DNS response message including the IPv4 address of the DSTM host 120 from the IPv6 DNS server 110 (step S116), the DSTM controller 134 performs an IPv4-over-IPv6 tunneling to deliver the response message to DSTM TEP 140 without converting the DNS response message through the DNS-ALG 132, and the DSTM TEP 140 decapsulates the message and transmits the DNS response message of A type including the IPv4 address of the DSTM host 120 to the IPv4 DNS server 150 (step S118).

Next, the IPv4 DNS server 150 transmits the DNS response message to the IPv4 host 160 (step S120), and acts to exchange data packet between the IPv4 host 160 and the DSTM host 120 (step S122).

Then, in case that the DSTM controller receives the DNS response message of AAAA type including the only IPv6 address of the DSTM host from the IPv6 DNS server (step S116), the DSTM controller assigns a temporary IPv4 address to the DSTM host 120 (step S124).

After then, the DSTM controller stores binding information such as the IPv6 address of the DSTM host 120, the assigned IPv4 address, a lifetime, and so on in the mapping table 136 (step S126) and sets up a timer for the lifetime.

The DSTM controller 134 registers the DNS name of the DSTM host 120 and the assigned IPv4 address in the IPv6 DNS server 110 (step S128), transmits the DSTM address assignment message to the DSTM host 120 and then informs the DSTM host 120 of the assigned IPv4 address (step S130).

Next, the DSTM controller 134 performs an IPv4-over-IPv6 tunneling to deliver the DNS response message through the DNS-ALG 132 to the DSTM TEP 140, and the DSTM TEP 140 decapsulates the tunneled DNS response message. Moreover, then, the DSTM controller 134 transmits the DNS response message including the IPv4 address of the DSTM host 120 to the IPv4 DNS server 150 (step S118).

Next, the IPv4 DNS server 150 transmits the DNS response message to the IPv4 host 160 (step S120), and acts to exchange a data packet between the IPv4 host 160 and the DSTM host 120 (step S122).

Then, if the DSTM host 120 wants to use the assigned IPv4 address after expiration of a lifetime, it may make a request for the extension of the lifetime of the assigned IPv4 address by transmitting the DSTM address extension request message to the DSTM controller 134 before expiration of the lifetime, and the DSTM controller 134 that has received the DSTM address extension request message extends the lifetime and informs the DSTM host 120 of the fact that the lifetime was extended through the DSTM address extension response message.

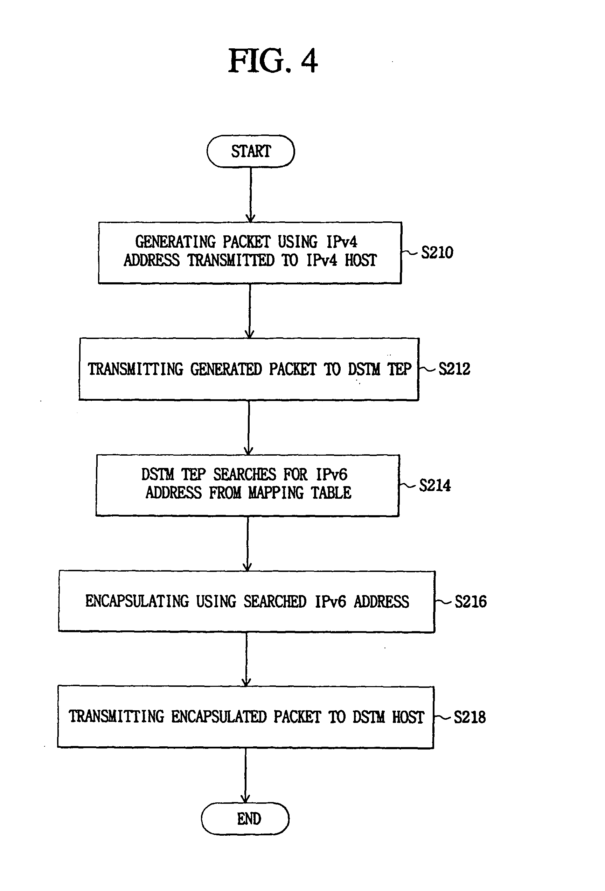

Fig. 4 is a flow chart showing a process to transmit a packet from an IPv4 host 160 to a DSTM host 120 shown in Fig. 3.

Referring to Fig. 4, the IPv4 host 160 generates a packet using a received IPv4 address (step S210), and transmits the generated packet to a DSTM TEP 140 (step S212).

Next, the DSTM TEP 140 searches for an IPv6 address from a mapping table 136 (step S214), encapsulates the packet using the searched IPv6 address (step S216) and transmits the encapsulated packet to the DSTM host 120 (step S218).

Here, as described above, in case that the DSTM TEP receives an IPv4 packet whose binding information the DSTM TEP does not have in its mapping table, it makes a request for binding information to the DSTM server 130, and the DSTM server 130 transmits corresponding binding information to the DSTM TEP. Therefore, it is possible to exchange a data packet between the IPv4 host 160 and the DSTM host 120 through various paths by placing two or more DSTM TEPs in a DSTM domain.

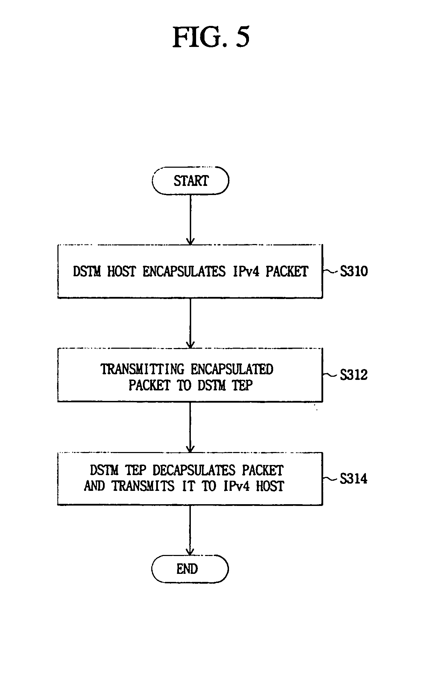

Fig. 5 is a flow chart showing a process to transmit a packet from a DSTM host 120 to an IPv4 host 160 shown in Fig. 3.

Referring to Fig. 5, the DSTM host 120 encapsulates the IPv4 packet (step S310), and transmits the capsulated packet to the DSTM TEP (step S312).

Then, the DSTM TEP decapsulates the packet and transmits the packet to the IPv4 host 150 (step S314).

The present invention can be realized as computer-executable instructions in computer-readable media. The computer-readable media includes all possible kinds of media in which computer-readable data is stored or included or can include any type of data that can be read by a computer or a processing unit. The computer-readable media include for example and not limited to storing media, such as magnetic storing media (*e.g.*, ROMs, floppy disks, hard disk, and the like), optical reading media (*e.g.*, CD-ROMs (compact disc-read-only memory), DVDs (digital versatile discs), re-writable versions of the optical discs, and the like), hybrid magnetic optical disks, organic disks, system memory (read-only memory, random access memory), non-volatile memory such as flash memory or any other volatile or non-volatile memory, other semiconductor media, electronic media, electromagnetic media, infrared, and other communication media such as carrier waves (*e.g.*, transmission via the Internet or another computer). Communication media generally embodies computer-readable instructions, data structures, program modules or other data in a modulated signal such as the carrier waves or other transportable mechanism including any information delivery media. Computer-readable media such as communication media may include wireless media such as radio frequency, infrared microwaves, and wired media such as a wired network. Also, the computer-readable media can store and execute computer-readable codes that are distributed in computers connected via a network. The computer readable medium also includes cooperating or interconnected computer readable media that are in the processing system or are distributed among multiple processing systems that may be local or remote to the processing system. The present invention can include the computer-readable medium having stored thereon a data structure including a plurality of fields containing data representing the techniques of the present invention.

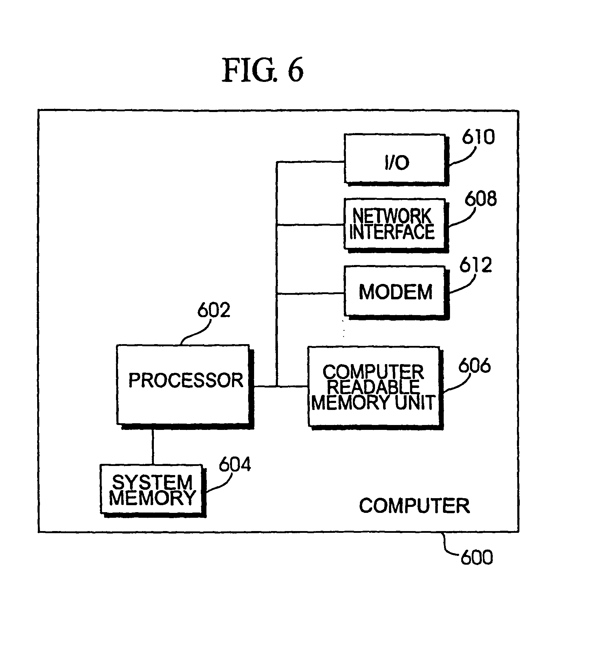

An example of a computer, but not limited to this example of the computer, that can read computer readable media that includes computer-executable instructions of the present invention is shown in FIG. 6. The computer 600 includes a processor 602 that controls the computer 600. The processor 602 uses the system memory 604 and a computer readable memory device 606 that includes certain computer readable recording media. A system bus connects the processor 602 to a network interface 608, modem 612 or other interface that accommodates a connection to another computer or network such as the Internet. The system bus may also include an input and output interface 610 that accommodates connection to a variety of other devices.

In accordance with the present invention, concerning an effect of the present invention, it is possible to support an IPv4 to IPv6 conversion even in case of initializing a connection from an IPv4 node to which a DSTM cannot support to an IPv6 node. Also, in accordance with the present invention, plural DSTM TEPs can be provided in a DSTM domain and a communication can be maintained using other plural DSTM TEPs even when a DSTM TEP causes a trouble.

Although the preferred embodiments of the present invention have been disclosed for illustrative purposes, those skilled in the art appreciate that various modifications, additions and substitutions are possible, without departing from the scope and spirit of the invention as disclosed in the accompanying claims.

## Claims

1. An apparatus for converting Internet protocol version 4 to Internet protocol version 6 using a dual stack comprising:
a dual stack transition mechanism server for converting a domain names service query message that inquires an Internet protocol version 4 address of a dual stack transition mechanism host received from an Internet protocol version 4 domain names service server to a domain names service query message which requests both Internet protocol version 4 address and Internet protocol version 6 address and then transmitting the converted message to said Internet protocol version 6 domain names service server, assigning an arbitrary Internet protocol version 4 address to said dual stack transition mechanism host and storing the assigned Internet protocol version 4 address in the host when receiving a domain names service response message including Internet protocol version 6 address information of said dual stack transition mechanism host only from said Internet protocol version 6 domain names service server, registering the assigned Internet protocol version 4 address in said Internet protocol version 6 domain names service server and informing said dual stack transition mechanism host of it, and transmitting a domain names service response message including the assigned Internet protocol version 4 address to the Internet protocol version 4 domain names service server; and
a dual stack transition mechanism tunneling end point for decapsulating data which are Internet protocol version 4-over-Internet protocol version 6 tunneled from said dual stack transition mechanism server or said dual stack transition mechanism host and transmitting the decapsulated data as an Internet protocol version 4 packet to said Internet protocol version 4 domain names service server or said Internet protocol version 4 host, and when receiving the Internet protocol version 4 packet from the Internet protocol version 4 domain names service server or said Internet protocol version 4 host, referring to a mapping table which is held and managed by itself, encapsulating the packet and performing an Internet protocol version 4-over-Intemet protocol version 6 tunneling to deliver the packet to said dual stack transition mechanism server or said dual stack transition mechanism host.

2. The apparatus according to claim 1, wherein said dual stack transition mechanism server includes a domain names service application layer gateway which, in case of receiving the domain names service query message inquiring the Internet protocol version 4 address of said dual stack transition mechanism host which has passed the Internet protocol version 4 domain names service server from the Internet protocol version 4 host, converting the received domain names service query message to a domain names service query message requesting both Internet protocol version 4 address and Internet protocol version 6 address and transmitting the converted message to said Internet protocol version 6 domain names service server;
a mapping table for storing binding information including said Internet protocol version 6 address and the assigned Internet protocol version 4 address of said dual stack transition mechanism host, a lifetime; and
a dual stack transition mechanism controller for, when receiving the domain names service query message that inquiries the Internet protocol version 4 address for said dual stack transition mechanism host from the Internet protocol version 4 domain names service server, transmitting the query message to said domain names service application layer gateway, when receiving a domain names service response message including Internet protocol version 4 address information of said dual stack transition mechanism host from the Internet protocol version 6 domain names service server, transmitting the response message to said Internet protocol version 4 domain names service server, when receiving a domain names service response message including Internet protocol version 6 address information of said dual stack transition mechanism host only from the Internet protocol version 6 domain names service server, assigning an arbitrary Internet protocol version 4 address to said dual stack transition mechanism host and then storing the assigned Internet protocol version 4 address in the mapping table, registering the assigned Internet protocol version 4 address in the Internet protocol version 6 domain names service server and informing the dual stack transition mechanism host of the assigned Internet protocol version 4 address, and converting the domain names service response message received from said Internet protocol version 6 domain names service server through the domain names service application layer gateway to a domain names service response message including the assigned Internet protocol version 4 address and transmitting the converted message to said Internet protocol version 4 domain names service server.

3. The apparatus according to claim 2, wherein, when receiving a dual stack transition mechanism address extension request message from said dual stack transition mechanism host, said dual stack transition mechanism controller extends a lifetime of the Internet protocol version 4 address and then operates a timer again, updates the Internet protocol version 6 domain names service server on domain names service information regarding a corresponding Internet protocol version 4 address and transmits the dual stack transition mechanism address extension response message to said dual stack transition mechanism host.

4. The apparatus according to claim 3, wherein the dual stack transition mechanism address extension request message comprises:
a lifetime field indicating a remaining time of the lifetime;
an Internet protocol version 4 address field indicating the Internet protocol version 4 address; and
an Internet protocol version 6 address field indicating the Internet protocol version 6 address of said dual stack transition mechanism host, and
the dual stack transition mechanism address extension response message comprises:
a code field indicating the result of the process for the dual stack transition mechanism address extension request message;
a lifetime field indicating the extended lifetime;
an Internet protocol version 4 address field; and
an Internet protocol version 6 address field indicating an Internet protocol version 6 address of said dual stack transition mechanism tunneling end point.

5. The apparatus according to claim 2, wherein, when said dual stack transition mechanism tunneling end point receives an Internet protocol version 4 packet for which said dual stack transition mechanism tunneling end point does not have binding information in its mapping table, said dual stack transition mechanism tunneling end point transmits a binding request message to said dual stack transition mechanism controller, and receives a binding information response message from said dual stack transition mechanism controller, and
said dual stack transition mechanism controller, when receiving a binding request message, searches for said mapping table and transmits to said dual stack transition mechanism tunneling end point the dual stack transition mechanism binding response message including the Internet protocol version 6 address for the requested Internet protocol version 4 address.

6. The apparatus according to claim 5, wherein the binding request message transmitted by the dual stack transition mechanism tunneling end point comprises:
an Internet protocol version 4 address field indicating an Internet protocol version 4 address of a global assigned to said dual stack transition mechanism host; and
an Internet protocol version 6 address field indicating an Internet protocol version 6 address of said dual stack transition mechanism tunneling end point which transmits a dual stack transition mechanism binding request message, and
a binding response message transmitted by said dual stack transition mechanism controller comprises:
a code field indicating the result of the process for said dual stack transition mechanism binding request message;
a 32-bit Internet protocol version 4 address field indicating an Internet protocol version 4 address of a global assigned to the dual stack transition mechanism host; and
an Internet protocol version 6 address field indicating an Internet protocol version 6 address of the dual stack transition mechanism host.

7. A method for converting to Internet protocol version 4 to Internet protocol version 6 using a dual stack, comprising the steps of:
when a dual stack transition mechanism server receives from an host a domain names service query message inquiring an Internet protocol version 4 address of a dual stack transition mechanism host which passed said Internet protocol version 4 domain names service server, converting the received domain names service query message to a domain names service query message that requests both Internet protocol version 4 address information and Internet protocol version 6 address information;
transmitting the converted domain names service query message to an Internet protocol version 6 domain names service server;
when said dual stack transition mechanism server receives from the Internet protocol version 6 domain names service server the domain names service response message including the Internet protocol version 4 address information of said dual stack transition mechanism host, transmitting the domain names service response message to said Internet protocol version 4 domain names service server by said dual stack transition mechanism server;
when said dual stack transition mechanism server receives from said Internet protocol version 6 domain names service server the domain names service response message including the Internet protocol version 6 address information of said dual stack transition mechanism host only, assigning an arbitrary Internet protocol version 4 address to the dual stack transition mechanism host by said dual stack transition mechanism server; and
registering by said dual stack transition mechanism server, the Internet protocol version 4 address assigned to said Internet protocol version 6 domain names service server and informing said dual stack transition mechanism host of the assigned Internet protocol version 4 address, and converting the domain names service response message received from the Internet protocol version 6 domain names service server to the domain names service response message including the assigned Internet protocol version 4 address and transmitting the converted message to the Internet protocol version 4 domain names service server to accommodate a packet being able to be exchanged between said Internet protocol version 4 host and said dual stack transition mechanism host.

8. The method according to claim 7, wherein said step of converting the received domain names service query message to the domain names service query message further comprises:
transmitting a domain names service query message to said Internet protocol version 4 domain names service server by said Internet protocol version 4 host;
transmitting a domain names service query message to a dual stack transition mechanism tunneling end point by said Internet protocol version 4 domain names service server;
transmitting a received domain names service query message to a dual stack transition mechanism server by said dual stack transition mechanism tunneling end point; and
converting by the dual stack transition mechanism server, a domain names service query message of an Internet protocol version 4 type to a domain names service query message including both Internet protocol version 4 type and Internet protocol version 6 type and transmitting the converted message to said Internet protocol version 4 domain names service server.

9. The method according to claim 7, wherein said step of registering the Internet protocol version 4 address assigned to said Internet protocol version 6 domain names service server, informing the dual stack transition mechanism host, and converting the domain names service response message, further comprises:
when said dual stack transition mechanism server receives from the Internet protocol version 6 domain names service server a domain names service response message including an Internet protocol version 6 address of said dual stack transition mechanism host only, assigning a temporary Internet protocol version 4 address to said dual stack transition mechanism host;
storing binding information including an Internet protocol version 6 address and the assigned Internet protocol version 4 address of said dual stack transition mechanism host and a lifetime on in said mapping table by said dual stack transition mechanism server;
registering a domain names service name of said dual stack transition mechanism host and the assigned Internet protocol version 4 address in said Internet protocol version 6 domain names service server by said dual stack transition mechanism server;
by said dual stack transition mechanism server, transmitting the dual stack transition mechanism address assignment message to said dual stack transition mechanism host and informing said dual stack transition mechanism host of the assigned Internet protocol version 4 address and an Internet protocol version 6 address of said dual stack transition mechanism tunneling end point;
performing an Internet protocol version 4-over-Intemet protocol version 6 tunneling to deliver the domain names service response message to said dual stack transition mechanism tunneling end point by said dual stack transition mechanism server;
by said dual stack transition mechanism tunneling end point, decapsulating the tunneled message and transmitting to said Internet protocol version 4 domain names service server a domain names service response message including an Internet protocol version 4 address of said dual stack transition mechanism host; and
by said Internet protocol version 4 domain names service server, transmitting the domain names service response message to said Internet protocol version 4 host and exchanging the data packet between the Internet protocol version 4 host and said dual stack transition mechanism host.

10. The method according to claim 9, wherein the step of registering the Internet protocol version 4 address assigned to said Internet protocol version 6 domain names service server, informing said dual stack transition mechanism host, and converting the domain names service response message, further comprises the steps of:
transmitting to said dual stack transition mechanism server, a dual stack transition mechanism address extension request message by said dual stack transition mechanism host;
by the dual stack transition mechanism server, when receiving a dual stack transition mechanism address extension request message from said dual stack transition mechanism host, extending the lifetime of the Internet protocol version 4 address and then operating the timer again, updating the Internet protocol version 6 domain names service server on the corresponding information, and transmitting to said dual stack transition mechanism host, a dual stack transition mechanism address extension response message; and
by the dual stack transition mechanism host, receiving the dual stack transition mechanism address extension response message from said dual stack transition mechanism server and operating the timer again.

11. The method according to claim 9, wherein the step of exchanging a data packet between the Internet protocol version 4 host and the dual stack transition mechanism host comprises the steps of:
by said Internet protocol version 4 host, generating a packet using the transmitted Internet protocol version 4 address and transmitting the generated packet to said dual stack transition mechanism tunneling end point;
by said dual stack transition mechanism tunneling end point, searching for the Internet protocol version 6 address from said mapping table, encapsulating the packet using the searched Internet protocol version 6 address, and transmitting the encapsulated packet to said dual stack transition mechanism host;
by said dual stack transition mechanism host, encapsulating the Internet protocol version 4 packet and then transmitting the encapsulated packet to said dual stack transition mechanism tunneling end point; and
by the dual stack transition mechanism tunneling end point, decapsulating the packet and then transmitting the decapsulated packet to said Internet protocol version 4 host.

12. The method according to claim 11, wherein the step of exchanging a data packet between the Internet protocol version 4 host and the dual stack transition mechanism host further comprises the steps of:
when the Internet protocol version 6 address is not found in the mapping table in step of transmitting the encapsulated packet to the dual stack transition mechanism host, transmitting the binding request message to said dual stack transition mechanism server;
by said dual stack transition mechanism server, when receiving the binding request message, searching for the mapping table and transmitting to said dual stack transition mechanism tunneling end point a dual stack transition mechanism binding response message including an Internet protocol version 6 address for the requested Internet protocol version 4 address; and
by said dual stack transition mechanism tunneling end point, receiving the binding response message from said dual stack transition mechanism server and encapsulating the packet using the Internet protocol version 6 address, and then transmitting the encapsulated packet to said dual stack transition mechanism host.

13. Apparatus for converting a first protocol to a second protocol using a dual stack, comprising:
a second protocol server performing a mapping of a domain name and a second protocol address, having a domain name of a second host, a second protocol address information and a first protocol address information, providing the address information of said second host that said second protocol server has when said second protocol server receives a query message asking about an Internet protocol address of said second host;
said second host including a dual stack and performing a first protocol-over-second protocol tunneling to deliver the first protocol packet to a dual stack transition mechanism tunneling end point using the dual stack;
a dual stack transition mechanism server which assigns a first protocol address dynamically, updates domain names service information for said first host in said second protocol server dynamically, and manages binding information;
said dual stack transition mechanism tunneling end point performing a tunneling of a packet between said second host and a first protocol host; and
a first protocol server which performs a mapping of a domain name of a host in a first protocol network and the first protocol address, and said first protocol host.

14. A method for converting a first protocol to a second protocol using a dual stack, comprising the steps of:
when a dual stack transition mechanism server receives from an host a domain names service query message inquiring a first protocol address of a dual stack transition mechanism host which passed said first protocol domain names service server, converting the received domain names service query message to a domain names service query message that requests both first protocol address information and second protocol address information;
transmitting the converted domain names service query message to a second protocol domain names service server;
when said dual stack transition mechanism server receives from said second protocol domain names service server the domain names service response message including the first protocol address information of said dual stack transition mechanism host, transmitting the domain names service response message to said first protocol domain names service server by said dual stack transition mechanism server;
when said dual stack transition mechanism server receives from said second protocol domain names service server the domain names service response message including the second protocol address information of said dual stack transition mechanism host only, assigning a first protocol address to the dual stack transition mechanism host by said dual stack transition mechanism server; and
registering by said dual stack transition mechanism server, the first protocol address assigned to said second protocol domain names service server and informing said dual stack transition mechanism host of the assigned first protocol address, and converting the domain names service response message received from the second protocol domain names service server to the domain names service response message including the assigned first protocol address and transmitting the converted message to the first protocol domain names service server to accommodate a packet being able to be exchanged between said first protocol host and said dual stack transition mechanism host.

15. The method of claim 14, with the assigning of first protocol address to the dual stack transition mechanism host being an arbitrary first protocol address.

16. The method of claim 14, with the assigning of the first protocol address to the dual stack transition mechanism host being a predetermined first protocol address.

17. An apparatus, comprising:
a dual stack transition mechanism server converting a domain names service query message that inquires an first protocol address of a dual stack transition mechanism host received from a first protocol domain names service server to a domain names service query message which requests both first protocol address and second protocol address and then transmitting the converted message to said second protocol domain names service server, assigning a predetermined first protocol address to said dual stack transition mechanism host and storing the assigned first protocol address in the host when receiving a domain names service response message including second protocol address information of said dual stack transition mechanism host only from said second protocol domain names service server, registering the assigned first protocol address in said second protocol domain names service server and informing said dual stack transition mechanism host of the assigned first protocol address , and transferring the assigned first protocol address to the first protocol domain names service server; and
a dual stack transition mechanism tunneling end point for decapsulating data which are first protocol-over-second protocol tunneled from said dual stack transition mechanism server or said dual stack transition mechanism host and tranferring the decapsulated data as a first protocol packet to said first protocol domain names service server or said first protocol host, and when receiving the first protocol packet from the first protocol domain names service server or said first protocol host, encapsulating the packet and performing a first protocol-over-second protocol tunneling to deliver the packet to said dual stack transition mechanism server or said dual stack transition mechanism host.

18. The apparatus of claim 17, further comprising of referring to a mapping table which is held and managed by itself when encapsulating the packet and performing a first protocol-over-second protocol tunneling to deliver the packet to said dual stack transition mechanism server or said dual stack transition mechanism host.

19. The apparatus of claim 18, further comprising of a second dual stack transition mechanism tunneling end point in a dual stack transition mechanism domain, where packets that the first protocol host has transmitted to the dual stack transition mechanism host may be transmitted through the second dual stack transition mechanism tunneling end point rather than corresponding dual stack transition mechanism tunneling end point.

20. A computer-readable medium having computer-executable instructions for performing a method, comprising:
converting a received domain names service query message to a domain names service query message that requests both first protocol address information and second protocol address information;
transmitting the converted domain names service query message to a second protocol domain names service server;
transmitting a domain names service response message to said first protocol domain names service server by said dual stack transition mechanism server;
assigning a first protocol address to the dual stack transition mechanism host by said dual stack transition mechanism server; and
registering by said dual stack transition mechanism server, the first protocol address assigned to said second protocol domain names service server and informing said dual stack transition mechanism host of the assigned first protocol address, and converting the domain names service response message received from the second protocol domain names service server to the domain names service response message including the assigned first protocol address and transmitting the converted message to the first protocol domain names service server to accommodate a packet being able to be exchanged between said first protocol host and said dual stack transition mechanism host.

21. The computer-readable medium having computer-executable instructions for performing a method of claim 20, with the conversion of the received domain names service query message being when a dual stack transition mechanism server receives from an host a domain names service query message inquiring a first protocol address of a dual stack transition mechanism host which passed said first protocol domain names service server.

22. The computer-readable medium having computer-executable instructions for performing a method of claim 20, with the transmitting of the domain names service response message when said dual stack transition mechanism server receives from said second protocol domain names service server the domain names service response message including the first protocol address information of said dual stack transition mechanism host.

23. The computer-readable medium having computer-executable instructions for performing a method of claim 20, with the assigning of the first protocol address when said dual stack transition mechanism server receives from said second protocol domain names service server the domain names service response message including the second protocol address information of said dual stack transition mechanism host only.

24. A computer-readable medium having a data structure comprising:
a first field containing data representing, when a dual stack transition mechanism server receives from an host a domain names service query message inquiring an Internet protocol version 4 address of a dual stack transition mechanism host which passed said Internet protocol version 4 domain names service server, converting the received domain names service query message to a domain names service query message that requests both Internet protocol version 4 address information and Internet protocol version 6 address information;
a second field containing data representing transmitting the converted domain names service query message to an Internet protocol version 6 domain names service server;
a third field containing data representing, when said dual stack transition mechanism server receives from the Internet protocol version 6 domain names service server the domain names service response message including the Internet protocol version 4 address information of said dual stack transition mechanism host, transmitting the domain names service response message to said Internet protocol version 4 domain names service server by said dual stack transition mechanism server;
a fourth field containing data representing, when said dual stack transition mechanism server receives from said Internet protocol version 6 domain names service server the domain names service response message including the Internet protocol version 6 address information of said dual stack transition mechanism host only, assigning an arbitrary Internet protocol version 4 address to the dual stack transition mechanism host by said dual stack transition mechanism server; and
a fifth field containing data representing registering by said dual stack transition mechanism server, the Internet protocol version 4 address assigned to said Internet protocol version 6 domain names service server.

25. The computer-readable medium having stored thereon a data structure of claim 24, with said fifth field containing data further representing informing said dual stack transition mechanism host of the assigned Internet protocol version 4 address, and converting the domain names service response message received from the Internet protocol version 6 domain names service server to the domain names service response message including the assigned Internet protocol version 4 address and transmitting the converted message to the Internet protocol version 4 domain names service server to accommodate a packet being able to be exchanged between said Internet protocol version 4 host and said dual stack transition mechanism host.
